# EUROPEAN PATENT APPLICATION

(11) **EP 3 928 973 A1**
(43) Date of publication of application: **29.12.2021**
(21) Application number: 21180686.4
(22) Date of filing: 21.06.2021
(51) Int. Cl.: B32B 1/08, B32B 25/08, B32B 27/06, B32B 27/08, B32B 27/32, F16L 11/04

(54) **COMPOSITON OF A MULTI-LAYER TUBE AND PROCESS FOR MAKING**

(30) Priority: 23.06.2020 US 202016909381
(71) Applicant: Cooper-Standard Automotive, Inc., Northville, MI 48168 (US)
(72) Inventor: Nie, Tao, Northville, 48168 (US); Zhang, Yingping, Northville, 48168 (US); Bensko, David Allen, Northville, 48168 (US)
(74) Representative: Crooks, Elizabeth Caroline

(57) **Abstract**

The present disclosure comprises a multi-layer tube including an inner layer comprising a thermoplastic material, an intermediate layer comprising high density polyethylene (HDPE); and an outer layer comprising a thermoplastic material. The HDPE intermediate layer is sandwiched between the outer layer and the inner layer of a thermoplastic material. The thermoplastic material is selected to facilitate extrusion and provide a low cost, robust multi-layer tube for any low temperature glycol cooling system applications.

## Description

### FIELD

The present disclosure relates to a tube for use in a motor vehicle. More particularly, the present disclosure relates to a multi-layer tube which can be employed for transporting fluids for temperature control in a motor vehicle.

### BACKGROUND

Single and multi-layer tubes of synthetic materials such as plastics and elastomers have been proposed for coolant lines. Coolant lines for electrical vehicles are growing in demand. Cooling systems for electrical vehicles and vehicles with internal combustion engines are similar. Both circulate coolant through a series of heat exchange pipes to transfer heat away from the engine.

Batteries in electrical vehicles must be cooled along with other conventional parts of the motor vehicle. Cooling systems for batteries in electrical vehicle operate at temperatures of at most around 60°C which are significantly lower than the temperatures at which cooling systems for internal combustion engines operate which is at most around 125°C. The lower temperatures at which electrical vehicles operate present an opportunity for employing different materials for coolant tubes.

It is important that a coolant tube be constructed of material that provides a barrier against coolant diffusion and leakage. Additionally, because the tube will carry coolant at low temperatures it must be able to withstand cold temperature gravel impact without breaking at low temperatures. Furthermore, the coolant may be transported at higher pressures in the cooling system, so the tube must have an adequate burst pressure and connection or hoop strength for connection to the system often with a barbed quick connector.

In general, the most successful multi-layer tubes have been co-extruded employing an outer layer composed of a material resistant to the exterior environment. The innermost layer is composed of a material which is chosen for its ability to block diffusion of coolant, low cost and long-term serviceability.

The use of high-density polyethylene (HDPE) for coolant tubes was not previously thought practical due to its anticipated exposure in coolant systems in internal combustion engines to temperatures close to its melting point. However, cooling systems in battery powered and hybrid electrical vehicles present new and broad opportunities for a material with excellent coolant resistance at lower cost than other materials on the market.

It is an objective to provide a low-cost multi-layer tube that will transport fluids exceptionally in a motor vehicle, particularly in an electrical motor vehicle.

### SUMMARY

The present disclosure comprises a multi-layer tube including an inner layer comprising a thermoplastic material, an intermediate layer comprising high density polyethylene (HDPE) and an outer layer comprising a thermoplastic material. HDPE is a low-cost material with great cold impact resistance. The HDPE intermediate layer is sandwiched between the outer layer and the inner layer of a thermoplastic material. The thermoplastic material is selected to facilitate the balanced tube properties such as seal-ability, burst strength, connector hoop strength and ease of extrusion for a low-cost, robust multi-layer tube.

### BRIEF DESCRIPTION OF THE DRAWING

One or more exemplary embodiments of the present invention will be described below in conjunction with the following drawing figure, in which:
FIG. 1 is a plan view of a tube having three layers according to the present disclosure;
FIG. 2 is a sectional view through a tube of FIG. 1;
FIG. 3 is a sectional view through an alternative embodiment of the tube of FIG. 2;
FIG. 4 is a sectional view through another alternative embodiment of the tube of FIG. 2;
FIG. 5 is a sectional view through a further embodiment of the tube of FIG. 2;
FIG. 6 is a sectional view through an even further embodiment of the tube of FIG. 4;
FIG. 7 is a sectional view through an additional alternative embodiment of the tube of FIG. 4; and
FIG. 8 is a schematic of a process for making the tube of the disclosure.

### DETAILED DESCRIPTION

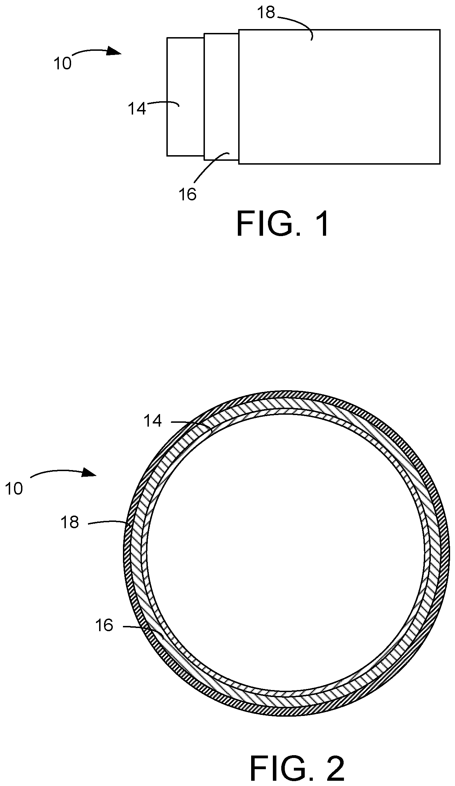

The present disclosure is a multi-layer tube 10 shown in FIGS. 1 and 2. The tube 10 has at least an inner or first layer 14, at least one intermediate or second layer 16, and at least a third or outer layer 18. The tube 10 is, preferably, fabricated by simultaneously coextruding thermoplastic materials in a conventional co-extrusion process. The tube 10 may either be co-extruded to a suitable length or may be co-extruded in continuous length and cut to fit the given application subsequently. The tube 10 of the present disclosure may have an outer diameter up to about 50 mm with an inner diameter of about 5 mm to about 30 mm. The total wall thickness may be from 0.9 to about 7 mm, suitably about 1 to about 3 mm, and preferably from 1 to about 2 mm. The tube may also have a smooth bore or a corrugated surface.

The tube 10 may be used for coolant transport for batteries in an electrical vehicle and lower temperature coolant transport for motors in both electrical and internal combustion vehicles. Typically, the coolant will be some type of glycol-based coolant, such as ethylene glycol. The tube 10 may typically encounter about 60°C to about 70°C continuous temperature for battery or motor cooling applications and about 80 to about 95°C peak temperature and about 1 to 4 bar maximum gage pressure.

The tube 10 comprises the intermediate layer 16 of polyethylene. Preferably, the intermediate layer is a HDPE. HDPE is known for its high strength-to-density ratio. HDPE has an excellent low temperature impact resistance. The density of the HDPE can range from 930 to 970 kg/m³ and is preferably 940 to 950 kg/m³. HDPE has little branching resulting in its higher density and stronger intermolecular forces and tensile strength than for low density polyethylene. Ethylene monomer may be polymerized with Ziegler-Natta catalyst under appropriate polymerization conditions to yield HDPE. The HDPE should have a cold tensile impact strength of about 95 to about 105 KJ/m² at -30°C using the ISO 8256 test. The HDPE has a relatively lower hoop strength. Hence, the HDPE in the intermediate layer is sandwiched between an inner layer 14 and an outer layer 18 to provide the necessary qualities. The intermediate layer 16 may have a wall thickness of about 0.1 to about 1 mm and preferably about 0.1 to about 0.7 mm. In any of the embodiments disclosed herein, the tube 10 may include the inner layer 14 which surrounds the intermediate layer 16 by coating an inner surface of the intermediate layer. The tube 10 may also include the outer layer 18 which surrounds the intermediate layer 16 by coating an outer surface of the intermediate layer. The intermediate layer 16 may be completely encased between the inner layer 14 and the outer layer 18.

The inner layer 14 may be co-extruded with the other layers during the extrusion process or other layers may be extruded around the inner layer in a subsequent process such as by crosshead extrusion. The outer layer 18 may be co-extruded with the other layers during the extrusion process or may be extruded around other layers in a subsequent process such as by crosshead extrusion. The inner layer 14 may comprise a material chosen for its coolant permeation resistance, flexibility, connection seal-ability, hoop strength and insulating characteristics and may have a wall thickness of about 0.1 to about 1 mm and preferably about 0.1 to about 0.7 mm. The outer layer 18 may comprise a material chosen for its structural qualities, such as abrasion resistance, hoop strength, impact resistance, chemical resistance or insulating characteristics, its extrudability and finish and may have a wall thickness of about 0.1 to about 1 mm and preferably about 0.1 to about 0.8 mm.

In an embodiment, the inner layer 14 and the outer layer 18 may be made of a melt processable, thermoplastic material. The inner layer 14 and the outer layer may be made of the same or different thermoplastic materials. The thermoplastic material may be a thermoplastic material selected from the group consisting of homopolymers or co-polymers of substituted or unsubstituted alkenes having no more than four carbon atoms, vinyl alcohol or vinyl acetate, and mixtures thereof. The thermoplastic material may be selected from the group consisting of zinc-chloride resistant Nylon 6, Nylon 11, Nylon 12, polyether block amides.

A preferred thermoplastic for the inner layer and/or the outer layer 18 comprises polypropylene. The polypropylene may be a polypropylene homopolymer, a polypropylene copolymer or a polypropylene based thermoplastic elastomer (TPE). A polypropylene copolymer comprises a propylene polymerized with at least another alkene monomer. In a copolymer, the polypropylene is covalently bonded with the other alkene monomer in the polymer chain. Polypropylene homopolymers or copolymers can be manufactured by any known process. For example, propylene polymers can be prepared from propene monomer in the presence of Ziegler-Natta catalyst systems or metallocene catalyst systems. Block copolymers can be manufactured similarly except propylene is generally first polymerized by itself or with another alkene monomer in the first reactor phase to form the semicrystalline matrix and low crystallinity or amorphous segments of propylene and the other alkene monomer are then copolymerized, in a second stage or subsequent stages, in the presence of the polymer produced in the first reactor. The other alkene monomer should have no more than four carbons and is preferably ethylene. Commercial polypropylene random and block copolymers are widely available from multiple polypropylene producers and encompass a wide range of grades. Random polypropylene copolymers are preferred.

Random copolymers of propylene can contain the comonomers inserted in a random manner so that the main chain crystallinity is disrupted, leading to drops in the melting point of the copolymer from about roughly 165°C for the homopolypropylene to as low as about 130°C in the random copolypropylene depending on the amount and type of comonomer employed.

The copolymers of polypropylene can be copolymerized in a multi-step process to obtain block copolypropylenes where chain segments consist of relatively crystalline homopolypropylene or random copolypropylene and chain segments of relatively amorphous or low crystallinity propylene ethylene copolymers. The melting points of the block copolymers will be dominated by the more crystalline segments of the copolymer to give a melting point of about 165° C for a homopolypropylene block copolymer or lower for a random copolypropylene block copolymer.

Ethylene is the preferred comonomer for a polypropylene copolymer, but other olefin monomers may be suitable. Additionally, random copolypropylene is preferred over block copolypropylene. The mass fraction of comonomer, particularly ethylene, in the propylene copolymer should be between about 0.1 and about 15 wt%, preferably between about 0.2 and about 6 wt%.

Another preferred thermoplastic for the inner layer and/or the outer layer 18 is a TPE. A TPE is a thermoplastic comprising a primary phase with a secondary phase of elastomer or rubber. Thermoplastic elastomers have the properties of thermoplastics but with hardness more like rubber. A suitable TPE that adheres to the polyethylene intermediate layer 16 is most suitable. Suitable thermoplastic elastomers include thermoplastic rubbers with a composition composed of a styrene-ethylene/butylene-styrene block copolymers and polyvinyl chloride compounds with plasticizers.

A preferred TPE is a thermoplastic vulcanizate (TPV). A TPV is a vulcanized alloy of mostly fully cured ethylene-propylene diene monomer (EPDM) particles encapsulated in a polypropylene matrix. The polypropylene matrix comprises the primary phase and the ethylene-propylene diene monomer comprises the secondary phase. TPV is commercially available from various suppliers including under the SANTOPRENE product line, a thermoplastic rubber composition, from ExxonMobil Chemical in Irving, Texas and the SARLINK product line, an oil resistant thermoplastic composition commercially available from Teknor Apex of Pawtucket, Rhode Island. TPV is also available from Elastron Group which is manufactured in Kocaeli, Turkey. A preferred TPV should have a Shore A Hardness between about 55 to about 95, and preferably about 80 to about 90 based on ISO 868. The thermoplastic, such as polypropylene, that does not have a phase of EPDM will have a greater Shore A Hardness. If desired, these materials may be modified to include flame retardants, plasticizers and the like.

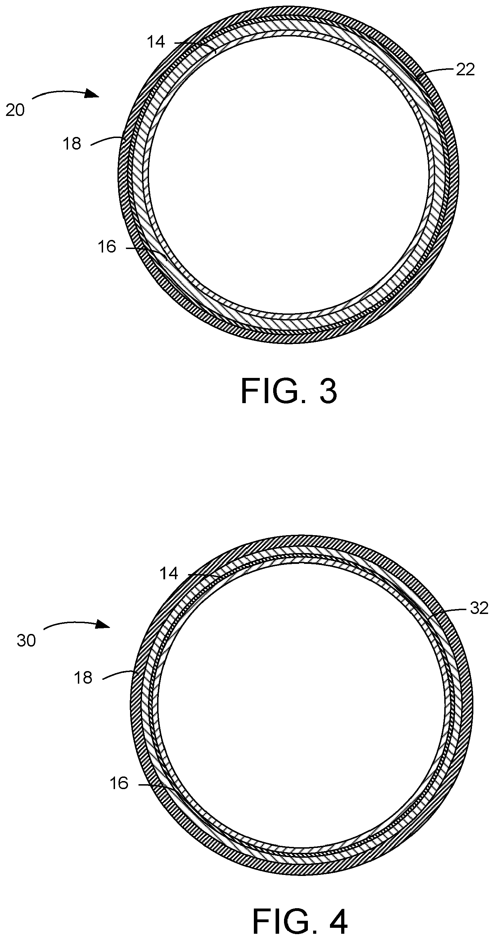

In order to get strong adhesion between a layer comprising polypropylene and a layer comprising polyethylene an adhesive layer may be employed. As shown in FIG. 3, the tube 20 may have an adhesive layer 22 interposed between the intermediate layer 16 and the outer layer 18. We have found that an outer layer 18 of TPE, and particularly a TPV, will not require an adhesive layer 22 and may be directly bonded to the intermediate layer 16 of HDPE as shown in FIG. 2.

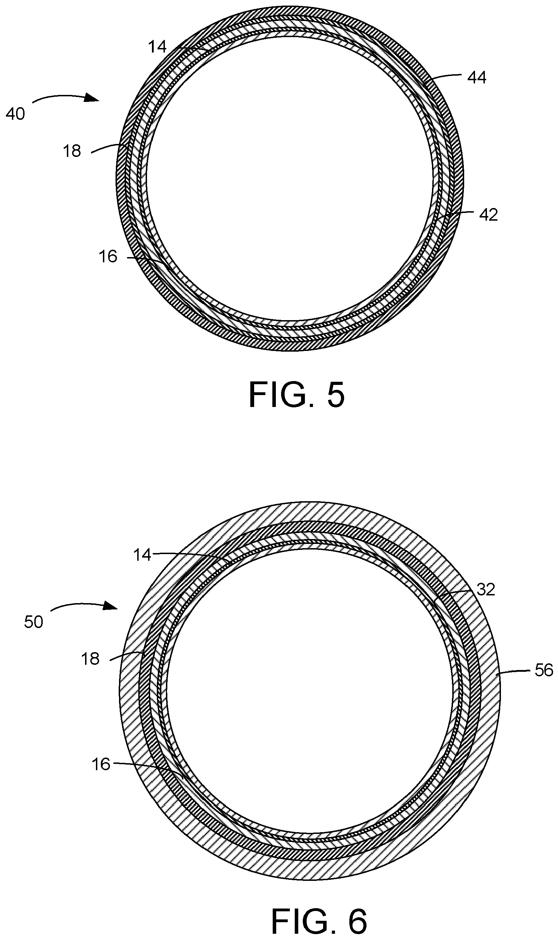

As shown in FIG. 4, the tube 30 has an adhesive layer 32 interposed between the intermediate layer 16 and the inner layer 14 and the inner layer comprises a thermoplastic such as polypropylene. We have found that an inner layer 14 of TPE, and particularly a TPV, will not require an adhesive layer 32 and may be directly bonded to the intermediate layer 16 of HDPE as shown in FIG. 2. As shown in FIG. 5, tube 40 has a first adhesive layer 42 interposed between the intermediate layer 16 and the inner layer 14 and a second adhesive layer 44 interposed between the intermediate layer 16 and the outer layer 18 because the inner layer and the outer layer comprise a thermoplastic such as polypropylene that is not a TPE, particularly not a TPV. In an embodiment, a TPV with a polypropylene primary phase and an EPDM secondary phase bonds well to the HDPE intermediate layer 16.

An ethylene copolymer-based adhesive may be employed as the adhesive layer 22, 32, 42 or 44, such as ethylene vinyl acetate and ethylene methyl acrylate adhesives when the tube 10, 20, 30 or 40 will not be subjected to elevated temperatures for extended periods. Lower density ethylene-α-olefin copolymer or higher comonomer propylene-α-olefin copolymer-based adhesives may also be used as the adhesive layer 22, 32, 42 or 44.

A suitable adhesive for the adhesive layer 22, 32, 42 or 44 can be either a polypropylene based adhesive or a TPE based adhesive. A preferred polypropylene-based adhesive is an anhydride-modified polypropylene resin. Each adhesive layer 22, 32, 42 or 44 may have a wall thickness of about 0.05 to about 0.5 mm and preferably about 0.05 to about 0.2 mm.

FIG. 6 shows an embodiment of the tube 50 of the present disclosure that includes an outer jacket comprising an outside layer 56. The tube 50 may take any of the embodiments herein, but FIG. 6 uses the embodiment of FIG. 4 as representative. The outside layer 56 surrounds the outer layer 18 and may comprise a thermoplastic material that is different from the thermoplastic material of the outer layer. When the outer layer 18 is a thermoplastic such as polypropylene, the outside layer 56 may be a thermoplastic elastomer such as TPV. When the outer layer 18 is a thermoplastic elastomer such as TPV the outside layer 56 may be a thermoplastic such as polypropylene.

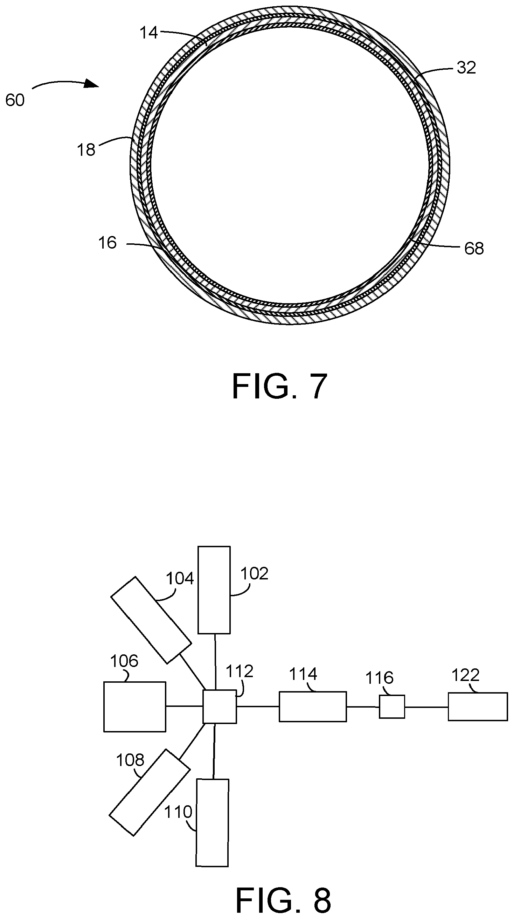

FIG. 7 shows an embodiment of the tube 60 of the present disclosure that includes an inner tube comprising an inside layer 68. The tube 60 may take any of the embodiments herein, but FIG. 7 uses the embodiment of FIG. 4 as representative. The inner layer 14 surrounds the inside layer 68, and the inside layer may comprise a thermoplastic material that is different from the thermoplastic material of the inner layer. When the inner layer 14 is a thermoplastic such as polypropylene, the inside layer 68 may be a thermoplastic elastomer such as TPV. When the inner layer 14 is a thermoplastic elastomer such as TPV the inside layer 68 may be a thermoplastic such as polypropylene.

While it is within the scope of this disclosure to prepare a tubing material having a plurality of overlying layers of various thermoplastic materials, the tube 10, 20, 30, 40, 50, 60 of the present disclosure generally has a maximum of nine layers, inclusive of the adhesive layers. In the preferred embodiment, the tube 10, 20, 30, 40, 50, 60 has three or four layers.

The tube 10, 20, 30, 40, 50, 60 of the present invention is suitable for use in motor vehicles, and may comprise an outer layer 18 or outside layer 56 which is nonreactive with the external environment and can withstand various shocks, vibrational fatigues and changes in temperature, as well as exposure to various corrosive or degradative compounds to which it would be exposed through the normal course of operation of the motor vehicle. Suitable materials for use in the present invention may be composed of any melt-processible extrudable thermoplastic materials which are resistant to ultraviolet degradation, extreme changes in heat. The material of choice may also exhibit resistance to environmental hazards such as exposure to road salt, zinc chloride and CaCl₂, and resistance to degradation upon contact with materials such as engine oil and brake fluid.

Referring now to FIG. 8, there is shown a schematic diagram 100 of the process of producing the tube 10, 20, 30, 40, 50, 60 of the present disclosure. The process comprises the step of simultaneously extruding at least the inner layer 14 comprising a thermoplastic material, the intermediate layer 16 comprising HDPE around the inner layer and the outer layer 18 comprising a thermoplastic material around the intermediate layer. The extrusion is carried out via an extruder 102 for extruding polymeric material into a suitable tubing configuration comprising at least an inner layer 14, an intermediate layer 16 and an outer layer 18. One or fewer extruders 102, 104, 106, 108 and/or 110 may be used for each layer to be extruded. One or more adhesive layers may also be extruded between the intermediate layer 16 and the inner layer 14 and/or the outer layer 18 comprising a thermoplastic such as propylene. It is to be understood that fewer or any number of extruders may be used as desired. If more than one extruder is used, the materials are then run through a co-extrusion head 112. The process then comprises the step of quenching via, for example, a water tank 114. The coextruded tube 10, 20, 30, 40, 50 or 60 is then sent through a puller 116, after which is it run through a cutter 122 which cuts the tube to desired lengths.

The multi-layer tube 10, 20, 30, 40, 50, 60 has strong properties necessary for automotive coolant transport. The tube 10, 20, 30, 40, 50, 60 is expected to withstand impact of 1.5 J (2 ft-lbs) of force at -40°C and exhibits a coolant permeation resistance better than traditional EPDM tubes. The tube 10, 20, 30, 40, 50, 60 is capable of being made into a corrugated tube without delamination and has adequate resistance to burst pressures that it will encounter during typical operation and also withstand vacuum pressure that it will encounter during manufacturing and testing. The tube also has sufficient seal-ability and hoop strength to enable it to couple with a barbed connection without leakage.

While the following is described in conjunction with specific embodiments, it will be understood that this description is intended to illustrate and not limit the scope of the preceding description and the appended claims.

Without further elaboration, it is believed that using the preceding description that one skilled in the art can utilize the present invention to its fullest extent and easily ascertain the essential characteristics of this invention, without departing from the spirit and scope thereof, to make various changes and modifications of the invention and to adapt it to various usages and conditions. The preceding preferred specific embodiments are, therefore, to be construed as merely illustrative, and not limiting the remainder of the disclosure in any way whatsoever, and that it is intended to cover various modifications and equivalent arrangements included within the scope of the appended claims.

In the foregoing, all temperatures are set forth in degrees Celsius and, all parts and percentages are by weight, unless otherwise indicated.

The present invention is also described in terms of the following numbered embodiments:

### Numbered Embodiment 1

A multi-layer tube comprising:
an inner layer comprising a thermoplastic material;
an intermediate layer comprising high density polyethylene; and
an outer layer comprising a thermoplastic material.

### Numbered Embodiment 2

The multi-layer tube of numbered embodiment 1 wherein the inner layer comprises polypropylene.

### Numbered Embodiment 3

The multi-layer tube of numbered embodiment 2 wherein the inner layer comprises polypropylene copolymer.

### Numbered Embodiment 4

The multi-layer tube of numbered embodiment 2 further including an inside layer inside of said inner layer comprising a thermoplastic material.

### Numbered Embodiment 5

The multi-layer tube of numbered embodiment 1 further comprising an adhesive layer between the intermediate layer and the inner layer.

### Numbered Embodiment 6

The multi-layer tube of numbered embodiment 1 wherein the inner layer comprises a thermoplastic elastomer.

### Numbered Embodiment 7

The multi-layer tube of numbered embodiment 6 wherein the inner layer comprises a thermoplastic vulcanizate.

### Numbered Embodiment 8

The multi-layer tube of numbered embodiment 7 wherein the inner layer is directly bonded to the intermediate layer.

### Numbered Embodiment 9

The multi-layer tube of numbered embodiment 1 wherein the outer layer comprises polypropylene.

### Numbered Embodiment 10

The multi-layer tube of numbered embodiment 9 wherein the outer layer comprises a polypropylene copolymer.

### Numbered Embodiment 11

The multi-layer tube of numbered embodiment 9 further including an outside layer outside of said outer layer comprising a thermoplastic elastomer.

### Numbered Embodiment 12

The multi-layer tube of numbered embodiment 10 further comprising an adhesive layer between the intermediate layer and the outer layer.

### Numbered Embodiment 13

The multi-layer tube of numbered embodiment 1 wherein the outer layer comprises a thermoplastic elastomer.

### Numbered Embodiment 14

The multi-layer tube of numbered embodiment 13 wherein the outer layer comprises a thermoplastic vulcanizate.

### Numbered Embodiment 15

The multi-layer tube of numbered embodiment 14 wherein the outer layer is directly bonded to the intermediate layer.

### Numbered Embodiment 16

A multi-layer tube comprising:
an inner layer comprising a polypropylene or a thermoplastic elastomer;
an intermediate layer comprising high density polyethylene; and
an outer layer comprising a polypropylene or a thermoplastic elastomer.

### Numbered Embodiment 17

The multi-layer tube of numbered embodiment 16 wherein at least one of the inner layer and the outer layer comprises polypropylene copolymer.

### Numbered Embodiment 18

The multi-layer tube of numbered embodiment 16 wherein one of the inner layer and the outer layer comprises polypropylene and further comprising an adhesive layer between the intermediate layer and the layer comprising polypropylene.

### Numbered Embodiment 19

The multi-layer tube of numbered embodiment 16 wherein at least one of the inner layer and the outer layer comprises a thermoplastic vulcanizate.

### Numbered Embodiment 20

A process for making a multi-layer tube comprising:
extruding an inner layer comprising a thermoplastic material, an intermediate layer comprising high density polyethylene around the inner layer, and an outer layer comprising a thermoplastic material around the intermediate layer; wherein all the layers are extruded simultaneously.

### Numbered Embodiment 21

The process of numbered embodiment 20 further comprising simultaneously extruding an adhesive layer between the intermediate layer and at least one of the inner layer and the outer layer that comprises polypropylene.

## Claims

1. A multi-layer tube comprising:
an inner layer comprising a thermoplastic material;
an intermediate layer comprising high density polyethylene; and
an outer layer comprising a thermoplastic material.

2. The multi-layer tube of claim 1 wherein the inner layer comprises polypropylene.

3. The multi-layer tube of claim 2 wherein the inner layer comprises polypropylene copolymer.

4. The multi-layer tube of claim 2 further including an inside layer inside of said inner layer comprising a thermoplastic material.

5. The multi-layer tube of claim 1 further comprising an adhesive layer between the intermediate layer and the inner layer.

6. The multi-layer tube of claim 1 wherein the inner layer comprises a thermoplastic elastomer; optionally
wherein the inner layer comprises a thermoplastic vulcanizate; optionally
wherein the inner layer is directly bonded to the intermediate layer.

7. The multi-layer tube of claim 1 wherein the outer layer comprises polypropylene.

8. The multi-layer tube of claim 7 wherein the outer layer comprises a polypropylene copolymer.

9. The multi-layer tube of claim 7 further including an outside layer outside of said outer layer comprising a thermoplastic elastomer.

10. The multi-layer tube of claim 8 further comprising an adhesive layer between the intermediate layer and the outer layer.

11. The multi-layer tube of claim 1 wherein the outer layer comprises a thermoplastic elastomer; optionally
wherein the outer layer comprises a thermoplastic vulcanizate; optionally
wherein the outer layer is directly bonded to the intermediate layer.

12. A multi-layer tube comprising:
an inner layer comprising a polypropylene or a thermoplastic elastomer;
an intermediate layer comprising high density polyethylene; and
an outer layer comprising a polypropylene or a thermoplastic elastomer.

13. The multi-layer tube of claim 12 wherein at least one of the inner layer and the outer layer comprises polypropylene copolymer; or
wherein one of the inner layer and the outer layer comprises polypropylene and further comprising an adhesive layer between the intermediate layer and the layer comprising polypropylene; or
wherein at least one of the inner layer and the outer layer comprises a thermoplastic vulcanizate.

14. A process for making a multi-layer tube comprising:
extruding an inner layer comprising a thermoplastic material, an intermediate layer comprising high density polyethylene around the inner layer, and an outer layer comprising a thermoplastic material around the intermediate layer; wherein all the layers are extruded simultaneously.

15. The process of claim 14 further comprising simultaneously extruding an adhesive layer between the intermediate layer and at least one of the inner layer and the outer layer that comprises polypropylene.
